# EUROPÄISCHE PATENTSCHRIFT

(11) **EP 2 090 775 B1**
(45) Veröffentlichungstag und Bekanntmachung des Hinweises auf die Patenterteilung: **20.05.2015**
(21) Anmeldenummer: 09000081.1
(22) Anmeldetag: 03.01.2009
(51) Int. Cl.: F03D 7/04, F03D 7/02

(54) **Verfahren zum Betrieb einer Windenergieanlage**
Method of controlling a wind turbine
Procédé de contrôle d'une éolienne

(30) Priorität: 16.02.2008 DE 102008009585
(43) Veröffentlichungstag der Anmeldung: 19.08.2009
(73) Patentinhaber: Nordex Energy GmbH, 22848 Norderstedt (DE)
(72) Erfinder: Schmidt, Gunnar, 27404 Elsdorf (DE)
(74) Vertreter: Hauck Patentanwaltspartnerschaft mbB

(56) Entgegenhaltungen:
- EP-A2- 2 020 506
- DE-A1- 19 926 553
- DE-A1-102004 056 254
- DE-A1-102006 034 106

## Beschreibung

Die vorliegende Erfindung betrifft ein Verfahren zum Betrieb einer Windenergieanlage mit einer Betriebssteuerung, die einen Sollwert für eine zu erzeugende Leistung der Windenergieanlage vorgibt.

Aus "Erneuerbare Energien 5/2006", Seiten 39 bis 43 ist bekannt, dass die Turbulenzintensität vom Standort und vom Zeitpunkt der Messung abhängt. Die Turbulenzintensität ist definiert als Standardabweichung σ der Windgeschwindigkeit bezogen auf einen Mittelwert der Windgeschwindigkeit. Die Turbulenzintensität hängt als ein Maß für die Fluktuation in der Windgeschwindigkeit unter anderem von der Topologie der Standortumgebung ab. Je höher die Oberflächenrauhigkeit in der Umgebung des Standortes ist, umso größer ist die Turbulenzintensität. Durch unterschiedliche Bodenbeschaffenheit in der Umgebung des Standorts treten größere Schwankungen in der Windgeschwindigkeit auf, die zu einer Zunahme der Standardabweichung σ der Windgeschwindigkeit führen. Im Ergebnis erhöht sich hierdurch die Turbulenzintensität. Es ist ferner bekannt, dass weitere Größen, wie beispielsweise Wetterbedingungen, benachbarte Windenergieanlagen und bei Off-Shore-Anlagen auch die Wellenhöhe, einen Einfluss auf die Turbulenzintensität haben.

Aus DE 10 2006 034 106 A1 ist ein Verfahren zum Betrieb einer Windturbine bekannt. Bei dem Verfahren werden Kennwerte für die Turbulenz über einen oder mehrere externe Sensoren aufgenommen. Bei der im Stand der Technik angesprochenen Windturbulenz handelt es sich um eine Größe, die gemäß [0039] abhängig ist von der Rotorblattstellung. In [0073] wird ein Windturbulenzensensor angesprochen, der die sich am Rotorblatt bildenden Turbulenzen misst. Die Windturbulenz lenz stimmt nicht mit der oben angesprochenen Turbulenzintensität überein, die vom Standort und vom Zeitpunkt der Messung abhängt.

Aus DE 199 26 553 A1 ist ein Betriebsverfahren für einen Windpark, bestehend aus mehreren Windenergieanlagen, bekannt geworden. Abhängig von der Windrichtung oder der Windstärke wird die Drehzahl der Windenergieanlage in dem Park derart eingestellt, dass an einem vorbestimmten Immissionspunkt ein vorbestimmter Schallpegel nicht überschritten wird.

Der Erfindung liegt die Aufgabe zugrunde, einen Betrieb der Windenergieanlage sicherzustellen, bei dem ohne die Windenergieanlage unnötigen Belastungen auszusetzen, zuverlässig möglichst selten eine Sollwertvorgabe reduziert wird.

Erfindungsgemäß wird die Aufgabe durch ein Verfahren mit den Merkmalen aus Anspruch 1 und alternativ aus Anspruch 4 gelöst. Vorteilhafte Ausgestaltungen bilden den Gegenstand der Unteransprüche.

Das erfindungsgemäße Verfahren betrifft den Betrieb einer Windenergieanlage, die eine Betriebssteuerung, eine Messeinrichtung und eine Steuerung aufweist. Die Betriebssteuerung dient allgemein für den Betrieb der Windenergieanlage und kann durch eine Sollwertvorgabe die von der Windenergieanlage erzeugte Leistung einregeln oder steuern. Die Windmesseinrichtung erfasst Windrichtung und Windgeschwindigkeit. Die gemessenen Werte für Windgeschwindigkeit und Windrichtung liegen an der Steuerung an. Die Turbulenzintensität ergibt sich als Quotient aus Standardabweichung der Windgeschwindigkeit dividiert durch die mittlere Windgeschwindigkeit. Die angesprochene Steuerung braucht nicht als separate Steuerung zusätzlich zu der Betriebssteuerung ausgebildet sein, sondern kann ein Bestandteil in der Betriebssteuerung sein. Bei dem erfindungsgemäßen Verfahren sind in der Steuerung ein oder mehrere Sektoren von kritischen Windrichtungen vorgesehen, in denen die ermittelte Turbulenzintensität den vörbestimmten Maximalwert für die Turbulenzintensität überschreitet. Ausgehend von dem oder den Sektoren kann ein Steuersignal für die Betriebssteuerung generiert werden, um den Sollwert der erzeugten elektrischen Größe zu reduzieren. Das Steuersignal für die Betriebssteuerung wird dann generiert, wenn die gemessene Windrichtung in einem Sektor der kritischen Windrichtung liegt und eine ermittelte Kenngröße einen vorbestimmten Maximalwert überschreitet. Bei dem erfindungsgemäßen Verfahren wird dann ein Steuersignal für einen Betrieb mit der reduzierten elektrischen Größe generiert, wenn beide Bedingungen erfüllt sind. Die eine Bedingung bezieht sich nur auf die Windrichtung und verlangt, dass der aktuelle Wert der Windrichtung in einem Sektor der kritischen Windrichtungen liegt. Die zweite Bedingung, die ebenfalls erfüllt sein muss, betrifft eine Kenngröße, die aktuell ermittelt wird. In der zweiten Bedingung wird geprüft, ob die Kenngröße den vorbestimmten Maximalwert überschreitet. Hierbei bestehen für die Abhängigkeit der Kenngröße zwei Möglichkeiten. In einer Alternative ist vorgesehen, dass zusätzlich zum Überschreiten eines Maximalwerts der Turbulenzintensität eine zusätzlich ermittelte Kenngröße für die Turmkopfbewegung und/oder Turmkopfbeschleunigung einen vorbestimmten kritischen Wert überschreiten muss, damit die Anlage mit einem gedrosselten Betrieb mit einem für die elektrische Größe reduzierten Sollwert betrieben wird. In einer anderen Alternative wird die Aktivität des Pitchreglers ausgewertet, um die Kenngröße zu bestimmen. Auch bei dieser Ausgestaltung wird wieder der aktuelle Wert für die Regleraktivität mit einem vorgegebenen Maximalwert für die Regleraktivität verglichen. Die Regleraktivität kann hierbei die zurückgelegte Amplitudenänderung pro Zeiteinheit oder die Häufigkeit der Reglereingriffe sein.

Das erfindungsgemäße Verfahren bietet den Vorteil, dass eine Reduzierung einer von der Windenergieanlage erzeugten elektrischen Größe stets abhängig von der Windrichtung erfolgt. Diesem Ansatz liegt die Erkenntnis zugrunde, dass aufgrund der Topologie des Standortes Schwankungen in der Windgeschwindigkeit in der einen oder anderen Windrichtung sich unterschiedlich auswirken können und daher unterschiedlich bei einer Drosselung des Betriebs zu berücksichtigen sind.

In einer möglichen Ausgestaltung des erfindungsgemäßen Verfahrens sind der oder die Sektoren von kritischen Windrichtungen der Steuerung vorgegeben. Dies kann beispielsweise erfolgen indem ein Standort für die Windenergieanlage vermessen wird und die Verteilung der Turbulenzintensität in Abhängigkeit der Windrichtung analysiert wird. Der oder die so bestimmten Sektoren von kritischen Windrichtungen können dann in einer Steuerung abgelegt werden.

Alternativ ist es auch möglich, dass die Steuerung aus einer Turbulenzintensität abhängig von der Windrichtung den oder die Sektoren von kritischen Windrichtungen ermittelt, in denen die festgestellte Turbulenzintensität einen Maximalwert für die Turbulenzihtensität überschreitet. Das Verfahren kann fortlaufend oder in definierten Zeitabständen durchgeführt werden.

In einer bevorzugten Weiterentwicklung des erfindungsgemäßen Verfahrens wertet die Steuerung als Kenngröße die Windgeschwindigkeit aus. Bei dieser Verfahrensausgestaltung wird also geprüft, ob die Windrichtung in dem Sektor der kritischen Windrichtung liegt und die Windgeschwindigkeit einen vorgegebenen Maximalwert überschreitet.

In einer alternativen Ausgestaltung berechnet die Steuerung als Kenngröße die Turbulenzintensität aus den gemessenen Werten für Windgeschwindigkeit und der zugehörigen Windrichtung. Bei dieser Ausgestaltung des erfindungsgemäßen Verfahrens wird für eine Windrichtung, die in einem Sektor von kritischen Windrichtungen liegt, überprüft, ob die zugehörige Turbulenzintensität einen vorgegebenen Maximalwert für die Turbulenzintensität übersteigt.

In der Ausgestaltung des Verfahrens, in der die Steuerung fortlaufend oder in Zeitabständen aus den gemessenen Werten für Windgeschwindigkeit und Windrichtung die Turbulenzintensität ermittelt, kann die Steuerung eine gleitende Mittelwertberechnung und/oder eine gleitende Berechnung der Standardabweichung vornehmen. Eine Reduzierung des Sollwerts für die Windenergieanlage erfolgt bei dieser Ausgestaltung des Verfahrens dann, wenn die Windrichtung in einem Sektor der kritischen Windrichtung liegt und die aktuelle Turbulenzintensität einen Maximalwert für die Turbulenzintensität überschreitet.

In einer bevorzugten Weiterführung des erfindungsgemäßen Verfahrens können zusätzlich weitere Bedingungen an den gedrosselten Betrieb gestellt werden. So kann vorgesehen werden, dass zusätzlich zu einem Überschreiten des Maximalwerts für die Turbulenzintensität auch der Istwert der Windgeschwindigkeit einen Maximalwert überschreitet.
Bei der elektrischen Größe handelt es sich bevorzugt um die von der Windenergieanlage erzeugte Wirkleistung. Zusätzlich sind aber auch andere elektrischen Größe denkbar, wobei in der Terminologie der Erfindung eine Reduzierung der elektrischen Größe zu einer Reduzierung der mechanischen Beanspruchung der Windenergieanlage führt.

In einer bevorzugten Weiterführung des erfindungsgemäßen Verfahrens liegt an der Steuerung ebenfalls ein aktueller Wert für einen Blatteinstellwinkel von mindestens einem Rotorblatt an. In einer bevorzugten Weiterführung des erfindungsgemäßen Verfahrens wird zur Reduzierung der elektrischen Größe ausschließlich oder zusätzlich eine Änderung des Blatteinstellwinkels herbeigeführt. Bei Änderung des Blatteinstellwinkels wird mindestens eines der Rotorblätter stärker aus dem Wind gedreht, so dass das aus dem Wind aufgenommene Drehmoment reduziert und damit auch die mechanische Belastung der Windenergieanlage reduziert wird.

Beispiele für das erfindungsgemäße Verfahren werden nachfolgend näher beschrieben.

Es zeigt:
- Fig. 1: die Turbulenzintensität in einem Standort in Abhängigkeit von der Windrichtung,
- Fig. 2: ein Ablaufdiagramm für einen windrichtungsabhängigen Eingriff in die Betriebssteuerung der Windenergieanlage,
- Fig. 3: ein Flussdiagramm für eine kontinuierliche Auswertung der Turbulenzintensität, und
- Fig. 4: eine alternative Ausführung für eine Auswertung der Turbulenzintensität.

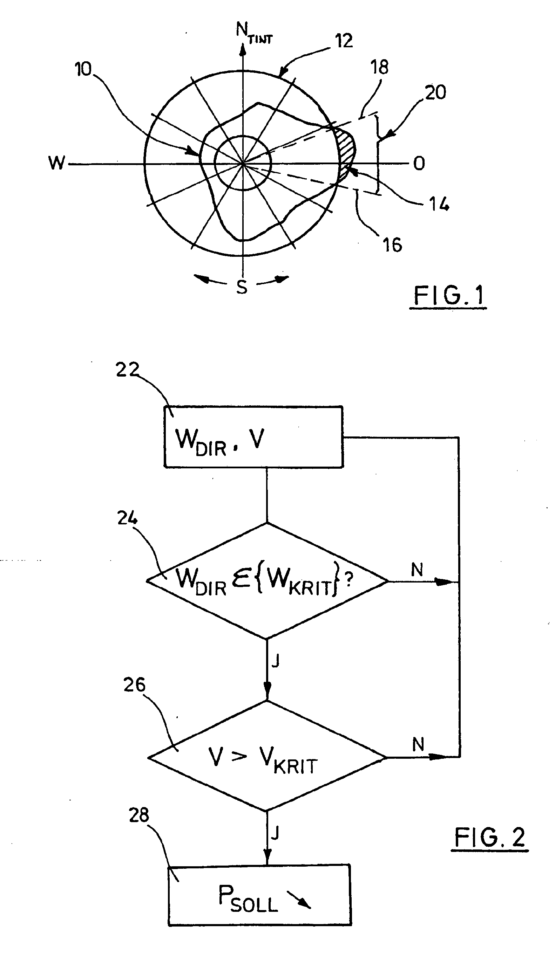

Fig. 1 zeigt für einen Standort der Windenergieanlage eine gemessene Turbulenzintensität als Linie 10 abhängig von der Windrichtung. In der gewählten Darstellung gibt der Abstand eines Punktes auf der Linie 10 vom Zentrum die in dieser Windrichtung vorliegende Turbulenzintensität an. In Fig. 1 ist ebenfalls ein Kreis 12 eingezeichnet, der eine maximale Turbulenzintensität vorgibt. Die maximale Turbulenzintensität ist unabhängig von der Windrichtung und führt damit zu einem Kreis, so dass in jeder Richtung der gleiche Abstand vom Zentrum der Darstellung vorliegt. In einem Gebiet 14, das schraffiert dargestellt ist, ist die an dem Ort vorliegende Turbulenzintensität 10 größer als der Maximalwert 12 der Turbulenzintensität. Die Schnittpunkte der Turbulenzintensität 10 mit dem Maximalwert für die Turbulenzintensität definieren zwei Windrichtungen 16, 18, die einen Sektor 20 von kritischen Windrichtungen begrenzen. Grob betrachtet liegt der Sektor der kritischen Windrichtung in östlicher Richtung. Dies bedeutet, dass es bei östlicher Windrichtung größere Schwankungen in der Windgeschwindigkeit gibt, als bei Wind aus den übrigen Richtungen.

Fig. 2 beschreibt an einem Blockdiagramm den Ablauf des erfindungsgemäßen Verfahrens. In einem Schritt 22 werden der Istwert der Windrichtung W_{DIR} und der Windgeschwindigkeit v gemessen. Für die gemessene Windrichtung wird in Schritt 24 überprüft, ob sie innerhalb des Sektors 20 liegt. Hierzu wird in Schritt 24 überprüft, ob die gemessene Windrichtung W_{DIR} in den kritischen Windrichtungen {W_{KRIT}} enthalten ist. Entgegen dem in Fig. 1 dargestellten Beispiel können auch Standorte auftreten, bei denen die kritischen Windrichtungen nicht nur in einem zusammenhängenden Sektor 20 liegen, sondern bei denen mehrere unterschiedlich große Sektoren von kritischen Windrichtungen vorliegen. Bei dem in Fig. 2 dargestellten Verfahren wird, falls die Windrichtung einer kritischen Windrichtung entspricht, in Schritt 26 überprüft, ob der Istwert der Windgeschwindigkeit v größer als ein vorbestimmter kritischer Wert für die Windgeschwindigkeit ist. In diesem Fall wird in einem nachfolgenden Schritt 28 die Sollwertvorgabe für die Leistung reduziert.

Der Ablauf in Fig. 2 macht deutlich, dass beim Überschreiten einer kritischen Windgeschwindigkeit eine Leistungsreduzierung genau dann vorgenommen wird, wenn der Wind aus einer kritischen Windrichtung kommt. Andersherum ausgedrückt bedeutet dies, dass auch beim Überschreiten der kritischen Windgeschwindigkeit keine Leistungsreduzierung vorgenommen wird, wenn die Windrichtung nicht aus einer kritischen Windrichtung stammt. Die Betrachtung der kritischen Windgeschwindigkeit im Rahmen der Turbulenzintensität darf nicht verwechselt werden mit der kritischen Windgeschwindigkeit, die unabhängig von der Windrichtung ein Herunterfahren der Windenergieanlage auslöst.

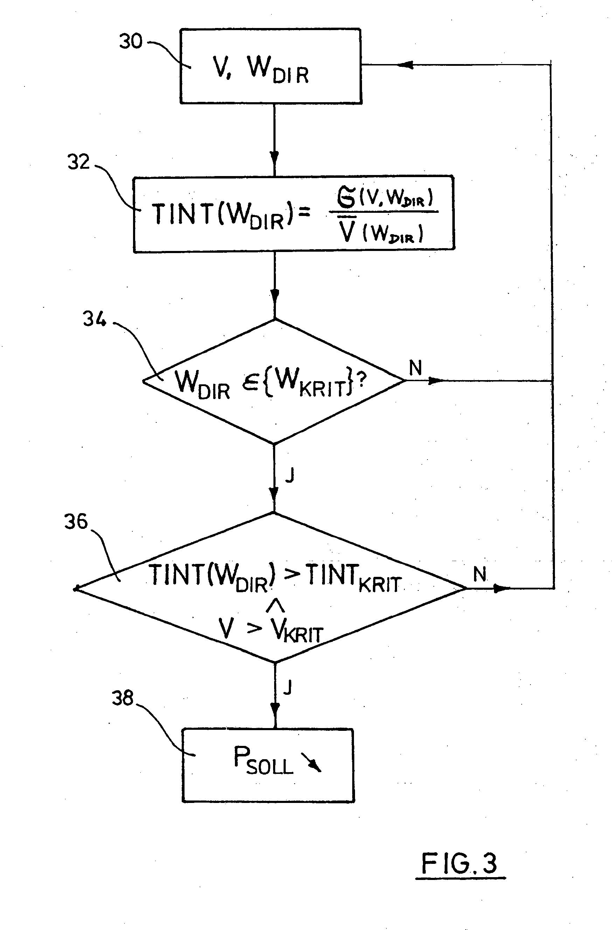

Fig. 3 zeigt eine alternative Ausgestaltung des erfindungsgemäßen Verfahrens, bei der in Schritt 30 erneut die Windrichtung W_{DIR} und die Windgeschwindigkeit v bestimmt werden. In einem nachfolgenden Schritt 32 wird die Turbulenzintensität T_{INT} abhängig von der Windrichtung T_{INT} (W_{DIR}) berechnet. Wie bereits erwähnt, ergibt sich die Turbulenzintensität als Quotient aus der Standardabweichung der Windgeschwindigkeit und der mittleren Windgeschwindigkeit. In dem dargestellten Rechenschritt 32 wird auch die mittlere Windgeschwindigkeit abhängig von der Windrichtung berücksichtigt. Alternativ ist es auch möglich, eine mittlere Windgeschwindigkeit zu berechnen, bei der nicht nur die in der Vergangenheit aufgetretenen Windgeschwindigkeiten gemittelt werden, sondern ebenfalls über die in der Vergangenheit erfassten Windrichtungen gemittelt wird. Bei dieser Mittelung ist die Turbulenzintensität dann nur aufgrund der Richtungsabhängigkeit der Standardabweichung von der Windrichtung abhängig.

In einem nachfolgenden Schritt 34 wird erneut überprüft, ob die aktuelle Windrichtung W_{DIR} in der Menge der kritischen Windrichtungen enthalten ist.

Liegt mit der aktuellen Windrichtung eine kritische Windrichtung vor, so werden anschließend in Schritt 36 zwei Bedingungen geprüft. Die erste Bedingung überprüft, ob die für die Windrichtung ermittelte Turbulenzintensität größer ist als eine kritische Turbulenzintensität. Zwar wurde im Prinzip bei der Feststellung, dass die Windrichtung einer kritischen Windrichtung entspricht, bereits überprüft, dass die zugehörige Turbulenzintensität größer als die kritische Turbulenzintensität ist. Jedoch hängt die auftretende Turbulenzintensität nicht nur von der Topologie des Standorts ab, sondern auch von Wetterbedingungen und anderen Umwelteinflüssen. Bei Off-Shore-Anlagen hat beispielsweise auch die Wellenhöhe einen Einfluss auf die Turbulenzintensität. Mit der ersten Bedingung in der Anfrage 36 wird also erneut überprüft, ob die aktuell berechnete Turbulenzintensität immer noch kritisch ist. Im Prinzip wird hier also noch einmal überprüft, ob die Windrichtung immer noch in einem kritischen Sektor liegt.

Als zweite Bedingung wird überprüft, ob die Windgeschwindigkeit größer als eine kritische Windgeschwindigkeit ist. Sind beide Bedingungen der Anfrage 36 erfüllt, so wird in Schritt 38 eine Reduzierung des Sollwerts ausgelöst.

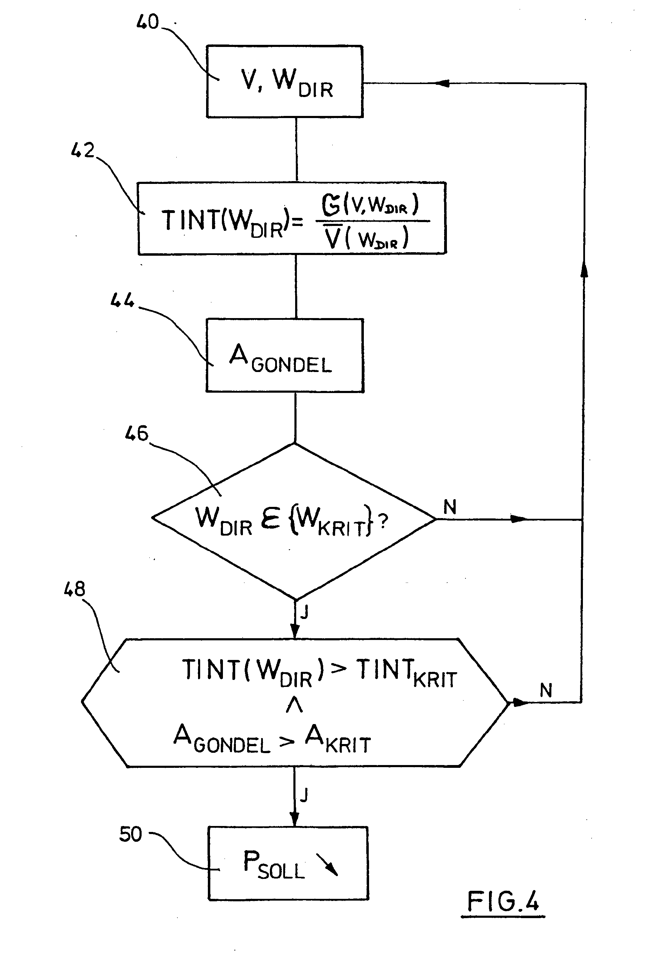

Fig. 4 zeigt eine weitere alternative Ausgestaltung der Erfindung, bei der in Schritt 40 Windgeschwindigkeit und Windrichtung erfasst werden. In Schritt 42 erfolgt erneut eine Berechnung der Turbulenzintensität abhängig von der Windrichtung. In Schritt 44 wird eine Kenngröße A_{GONDEL} für die Belastung der Windenergieanlage ermittelt. Bei der Kenngröße A_{GONDEL} kann es sich beispielsweise um Kenngrößen einer Bewegung der Gondel und/oder einer Bewegung des Turms der Windenergieanlage handeln.

In Schritt 46 wird erneut überprüft, ob die aktuelle Windrichtung zu den kritischen Windrichtungen gehört. In Verfahrensschritt 48 wird anschließend überprüft, ob der aktuell ermittelte Wert für die Turbulenzintensität größer ist als ein kritischer Wert für die Turbulenzintensität. Zusätzlich wird geprüft, ob auch der aktuelle Wert der Kenngröße A_{GONDEL} größer als ein vorbestimmter Maximalwert A_{KRIT} ist. In diesem Fall, wenn beide Bedingungen erfüllt sind, wird in Verfahrensschritt 50 eine Sollwertabsenkung ausgelöst.

Die vorstehenden Verfahren wurden beispielhaft für die Situation erläutert, in der der Sektor der kritischen Windrichtungen einmal anhand einer aufgezeichneten Turbulenzintensität für den Standort ermittelt wurde. Bei dem erfindungsgemäßen Verfahren ist es auch möglich, aufgrund der berechneten Turbulenzintensität in den Verfahrensschritten 32 und 42 fortlaufend die Sektorengrenzen anzupassen und so dynamisch auch die kritischen Windrichtungen zu verändern. Ebenfalls ist es möglich, durch einen kompletten Messvorgang in regelmäßigen Abständen die Turbulenzintensität abhängig von der Windrichtung für einen Standort neu zu bestimmen.

## Patentansprüche

1. Verfahren zum Betrieb einer Windenergieanlage, mit
- einer Betriebssteuerung, die einen Sollwert für eine zu erzeugende elektrische Größe der Windenergieanlage vorgibt,
- einer Windmesseinrichtung, die die Windrichtung und die Windgeschwindigkeit erfasst, und
- einer Steuerung, an der die gemessenen Werte für die Windgeschwindigkeit und die Windrichtung anliegen,
bei dem Verfahren laufen folgende Verfahrensschritte ab:
- in der Steuerung sind ein oder mehrere Sektoren von kritischen Windrichtungen vorgesehen, wobei in dem oder den Sektoren der kritischen Windrichtungen eine Turbulenzintensität einen Maximalwert für die Turbulenzintensität überschreitet,
- eine Kenngröße für die Turmkopfbewegung und/oder -beschleunigung ermittelt wird und die Steuerung ein Steuersignal für die Betriebssteuerung generiert, um den Sollwert der zu erzeugenden elektrischen Größe zu reduzieren, wenn die gemessene Windrichtung in einem Sektor der kritischen Windrichtungen liegt und der Maximalwert für die Turbulenzintensität überschritten wird und zusätzlich die ermittelte Kenngröße einen vorbestimmten Maximalwert für die Kenngröße überschreitet.

2. Verfahren nach Anspruch 1, **dadurch gekennzeichnet, dass** die Kenngröße zusätzlich abhängig von der gemessenen Windgeschwindigkeit und/oder von einer Regleraktivität ermittelt wird.

3. Verfahren nach Anspruch 2, **dadurch gekennzeichnet, dass** zur Bestimmung der Kenngröße die Regleraktivität des Pitchreglers ermittelt wird.

4. Verfahren zum Betrieb einer Windenergieanlage, mit
- einer Betriebssteuerung, die einen Sollwert für eine zu erzeugende elektrische Größe der Windenergieanlage vorgibt,
- einer Windmesseinrichtung, die die Windrichtung und die Windgeschwindigkeit erfasst, und
- einer Steuerung, an der die gemessenen Werte für die Windgeschwindigkeit und die Windrichtung anliegen,
bei dem Verfahren laufen folgende Verfahrensschritte ab:
- in der Steuerung sind ein oder mehrere Sektoren von kritischen Windrichtungen vorgesehen, wobei in dem oder den Sektoren der kritischen Windrichtungen eine Turbulenzintensität einen Maximalwert für die Turbulenzintensität überschreitet,
- eine Kenngröße abhängig von einer Reglertätigkeit des Pitchreglers ermittelt wird und die Steuerung ein Steuersignal für die Betriebssteuerung generiert, um den Sollwert der zu erzeugenden elektrischen Größe zu reduzieren, wenn die gemessene Windrichtung in einem Sektor der kritischen Windrichtungen liegt und die ermittelte Kenngröße einen vorbestimmten Maximalwert für die Kenngröße überschreitet.

5. Verfahren nach einem der Ansprüche 1 bis 4, **dadurch gekennzeichnet, dass** der oder die Sektoren von kritischen Windrichtungen der Steuerung vorgegeben sind.

6. Verfahren nach einem der Ansprüche 1 bis 4, **dadurch gekennzeichnet, dass** die Steuerung aus einer von der Windrichtung abhängigen Turbulenzintensität den oder die Sektoren von kritischen Windrichtungen ermittelt, wobei die Turbulenzintensität sich als Quotient aus der Standardabweichung der Windgeschwindigkeit dividiert durch die mittlere Windgeschwindigkeit ergibt. ,

7. Verfahren nach einem der Ansprüche 1 bis 6, **dadurch gekennzeichnet, dass** die Steuerung zusätzlich als Kenngröße die Windgeschwindigkeit auswertet.

8. Verfahren nach einem der Ansprüche 1 bis 7, **dadurch gekennzeichnet, dass** die Steuerung als Kenngröße zusätzlich die Turbulenzintensität aus den gemessenen Werten der Windgeschwindigkeit und den zugehörigen Windrichtungen berechnet, wobei die Turbulenzintensität sich als Quotient aus der Standardabweichung der Windgeschwindigkeit dividiert durch die mittlere Windgeschwindigkeit ergibt.

9. Verfahren nach Anspruch 8, **dadurch gekennzeichnet, dass** die Steuerung fortlaufend aus den gemessenen Werten für die Windgeschwindigkeit und die Windrichtung die Turbulenzintensität berechnet.

10. Verfahren nach einem der Ansprüche 1 bis 9, **dadurch gekennzeichnet, dass** die Steuerung bei Überschreiten des Maximalwerts für die Turbulenzintensität das Steuersignal für die Betriebssteuerung nur dann generiert, wenn zusätzlich der Istwert der Windgeschwindigkeit einen Maximalwert überschreitet.

11. Verfahren nach einem der Ansprüche 1 bis 10, **dadurch gekennzeichnet, dass** als elektrische Größe die Wirkleistung vorgesehen ist.

12. Verfahren nach einem der vorangehenden Ansprüche, **dadurch gekennzeichnet, dass** an der Steuerung ein aktueller Wert für den Blatteinstellwinkel anliegt.

13. Verfahren nach Anspruch 12, **dadurch gekennzeichnet, dass** die Reduzierung der elektrischen Größe ausschließlich oder zusätzlich durch eine Änderung des Blatteinstellwinkels von mindestens einem Rotorblatt erfolgt.

14. Verfahren nach Anspruch 4 oder einem der Ansprüche 5 bis 13, sofern diese auf Anspruch 4 zurückbezogen sind, **dadurch gekennzeichnet, dass** die Steuerung bei Überschreiten des Maximalwerts für die Turbulenzintensität das Steuersignal für die Betriebssteuerung nur dann generiert, wenn zusätzlich eine Kenngröße für die Turmkopfbewegung und/oder -beschleunigung einen vorbestimmten kritischen Wert überschreitet.

## Claims

1. Method for operating a wind turbine, comprising
• an operation management, which is configured to preset a desired value for an electric variable to be generated by the wind turbine;
• a wind measurement device, which is configured to determine the wind direction and the wind velocity, and
• a controller, to which the measured values for the wind velocity and the wind direction are supplied to,
the method comprising the steps of:
• one or more sectors of critical wind directions are provided in the controller, wherein in the sector or sectors of critical wind directions a turbulence intensity exceeds a maximum value for the turbulence intensity,
• a characteristic value for the tower head movement and/or tower head acceleration is determined and the controller generates a control signal for the operation management, in order to reduce the desired value of the electric variable to be generated if:
∘ the measured wind direction is determined to be within a sector of critical wind directions,
∘ the determined maximum value for the turbulence intensity is exceeded, and
∘ the determined characteristic value additionally exceeds a predetermined maximum value for the characteristic value.

2. Method according to claim 1, **characterised in that** the characteristic value is determined additionally depending on the measured wind velocity and/or on a controller's activity.

3. Method according to claim 2, **characterised in that** the controller's activity of the pitch controller is detected for determining the characteristic value.

4. Method for operating a wind turbine, comprising:
• an operation management, which is configured to preset a desired value for an electric variable to be generated by the wind turbine;
• a wind measurement device, which is configured to determine the wind direction and the wind velocity, and
• a controller, to which the measured values for the wind velocity and the wind direction are supplied to,
the method comprising the steps of:
• one or more sectors of critical wind directions are provided in the controller, wherein in the sector or sectors of critical wind directions a turbulence intensity exceeds a maximum value for the turbulence intensity,
• a characteristic value depending on a controller's activity of the pitch controller is determined and the controller generates a control signal for the operation management, in order to reduce the desired value of the electric variable to be generated if:
o the measured wind direction is determined to be within a sector of critical wind directions, and
o the determined characteristic value exceeds a predetermined maximum value for the characteristic value.

5. Method according to one of claims 1 to 4, **characterised in that** the sector or sectors of critical wind directions are preset in the controller.

6. Method according to one of claims 1 to 4, **characterised in that** the controller determines the sector or sectors of critical wind directions from a turbulence intensity depending on the wind direction, wherein the turbulence intensity is defined as the quotient of the standard deviation of the wind velocity divided by the average wind velocity.

7. Method according to any one of claims 1 to 6, **characterised in that** the controller additionally analyses the wind velocity as a further characteristic value.

8. Method according to one of claims 1 to 7, **characterised in that** the controller additionally calculates the turbulence intensity as a characteristic value from the measured values of the wind velocity and the associated wind directions, wherein the turbulence intensity is defined as the quotient of the standard deviation of the wind velocity divided by the average wind velocity.

9. Method according to claim 8, **characterised in that** the controller continuously calculates the turbulence intensity from the measured values of the wind velocity and the wind direction.

10. Method according to any one of claims 1 to 9, **characterised in that** if the maximum value for the turbulence intensity is exceeded, the controller generates the control signal for the operation management only if the actual value of the wind velocity additionally exceeds a maximum value.

11. Method according to one of claims 1 to 10, **characterised in that** the active power is provided as the electric variable.

12. Method according to one of the preceding claims, **characterised in that** an actual value for the blade pitch angle is present at the controller.

13. Method according to claim 12, **characterised in that** the reduction of the electric variable takes place by solely or additionally changing the blade pitch angle of at least one rotor blade.

14. Method according to claim 4 or one of claims 5 to 13 provided that said claims depend on claim 4, **characterised in that** if the maximum value for the turbulence intensity is exceeded, the controller generates the control signal for the operation management if additionally a characteristic value for the tower head movement and/or tower head acceleration exceeds a predetermined critical value.

## Revendications

1. Procédé d'opération d'une éolienne, avec
• un contrôleur de fonctionnement qui prédéfinit une consigne pour une grandeur électrique de l'éolienne devant être générée,
• un dispositif de mesure du vent, qui détecte la direction du vent et la vitesse du vent, et
• un système de commande, dans lequel les valeurs mesurées pour la vitesse du vent et la direction du vent sont présentes,
dans le procédé se déroulent les étapes de procédé suivantes:
• un ou plusieurs secteurs de directions du vent critiques sont pourvus dans le système de commande, une intensité des turbulences dépassant une valeur maximale pour l' intensité des turbulences dans le ou les secteur(s) de directions du vent critiques,
• une caractéristique spécifique pour le mouvement et/ou l'accélération de la nacelle est déterminée et le système de commande génère un signal de commande pour le contrôleur de fonctionnement afin de réduire la consigne pour la grandeur électrique de l'éolienne devant être générée quand la direction du vent mesurée est dans un secteur des directions du vent critiques et la valeur maximale pour l'intensité des turbulences est dépassée et en outre, la caractéristique spécifique déterminée dépasse une valeur maximale prédéterminée pour la caractéristique spécifique.

2. Procédé selon la revendication 1, **caractérisé en ce que** la caractéristique spécifique est en outre déterminée en fonction de la vitesse du vent mesurée et/ou d' une activité de régulateur.

3. Procédé selon la revendication 2, **caractérisé en ce que** l'activité de régulateur de pas est déterminée pour établir la caractéristique spécifique.

4. Procédé d'opération d'une éolienne, avec
• un contrôleur de fonctionnement qui prédéfinit une consigne pour une grandeur électrique de l'éolienne devant être générée,
• un dispositif de mesure du vent, qui détecte la direction du vent et la vitesse du vent, et
• un système de commande, dans lequel les valeurs mesurées pour la vitesse du vent et la direction du vent sont présentes,
dans le procédé se déroulent les étapes de procédé suivantes:
• un ou plusieurs secteurs de directions du vent critiques sont pourvus dans le système de commande, une intensité des turbulences dépassant une valeur maximale pour l' intensité des turbulences dans le ou les secteur(s) de directions du vent critiques,
• une caractéristique spécifique est déterminée en fonction d'une activité du régulateur de pas et le système de commande génère un signal de commande pour le contrôleur de fonctionnement afin de réduire la consigne pour la grandeur électrique de l'éolienne devant être générée quand la direction du vent mesurée est dans un secteur des directions du vent critiques et la caractéristique spécifique déterminée dépasse une valeur maximale prédéterminée pour la caractéristique spécifique.

5. Procédé selon l'une quelconque des revendications 1 a 4, **caractérisé en ce que** le ou les secteur(s) de directions de vent critiques sont prédéfinis au système de commande.

6. Procédé selon l'une quelconque des revendications 1 a 4, **caractérisé en ce que** le système de commande détermine le ou les secteur(s) de directions du vent critiques à partir d'une intensité des turbulences en fonction de la direction du vent, l'intensité des turbulences résultant comme le quotient de la déviation standard de la vitesse du vent, divisée par la vitesse du vent moyenne.

7. Procédé selon l'une quelconque des revendications 1 a 6, **caractérisé en ce que** le système de commande analyse en outre la vitesse du vent comme caractéristique spécifique.

8. Procédé selon l'une quelconque des revendications 1 a 7, **caractérisé en ce que** le système de commande calcule comme caractéristique spécifique en outre l'intensité des turbulences à partir des valeurs mesurées de la vitesse du vent et les directions du vent associées, l'intensité des turbulences résultant comme le quotient de la déviation standard de la vitesse du vent, divisée par la vitesse du vent moyenne.

9. Procédé selon la revendication 8, **caractérisé en ce que** le système de commande continûment calcule l'intensité des turbulences à partir des valeurs mesurées pour la vitesse du vent et la direction du vent.

10. Procédé selon l'une quelconque des revendications 1 a 9, **caractérisé en ce que** quand la valeur maximale pour l'intensité des turbulences est dépassée, le système de commande génère le signal de commande pour le contrôleur de fonctionnement seulement dans le cas que la valeur réelle de la vitesse du vent dépasse en outre une valeur maximale.

11. Procédé selon l'une quelconque des revendications 1 a 10, **caractérisé en ce que** la puissance effective est pourvue comme grandeur électrique.

12. Procédé selon l'une quelconque des revendications précédentes, **caractérisé en ce que** une valeur momentanée pour le pas des pales est présente dans le système de commande.

13. Procédé selon la revendication 12, **caractérisé en ce que** la réduction de la grandeur électrique résulte seulement ou en addition par un changement du pas de pale d'au moins une pale de rotor.

14. Procédé selon la revendication 4 ou l'une quelconque des revendications 5 a 13, pour autant que celles-ci se réfèrent à la revendication 4, **caractérisé en ce que** quand la valeur maximale pour l'intensité des turbulences est dépassée, le système de commande génère le signal de commande pour le contrôleur de fonctionnement seulement dans le cas qu' en outre, une caractéristique spécifique pour le mouvement et/ou l'accélération de la nacelle dépasse une valeur critique prédéterminée.
